# EUROPÄISCHE PATENTSCHRIFT

(11) **EP 2 383 457 B1**
(45) Veröffentlichungstag und Bekanntmachung des Hinweises auf die Patenterteilung: **20.12.2017**
(21) Anmeldenummer: 11160979.8
(22) Anmeldetag: 04.04.2011
(51) Int. Cl.: F02M 21/02

(54) **Gasventil**
Gas valve
Vanne de gaz

(30) Priorität: 29.04.2010 AT 7152010
(43) Veröffentlichungstag der Anmeldung: 02.11.2011
(73) Patentinhaber: Hoerbiger Kompressortechnik Holding GmbH, 1220 Wien (AT)
(72) Erfinder: Ranegger, Gerhard, 8443, Gleinstätten (AT); Geh, Martin, 2353, Guntramsdorf (AT)
(74) Vertreter: Patentanwälte Pinter & Weiss OG

(56) Entgegenhaltungen:
- GB-A- 2 335 236
- US-A- 4 787 418
- US-A- 4 941 447

## Beschreibung

Die gegenständliche Erfindung betrifft ein trockenlaufendes Gasventil mit einem scheibenförmigen Ventilelement, das mit einem Ventilsitz dichtend zusammenwirkt, wobei das Ventilelement mit einem Magnetanker verbunden ist, der mit einem im Gasventil angeordneten Elektromagneten zusammenwirkt, wobei das Ventilelement radial innen geführt gelagert angeordnet ist, indem am Ventilelement radial innen ein Führungsbereich mit einer zentralen Ausnehmung vorgesehen ist, deren innere Umfangsfläche eine Führungsfläche bildet und das Ventilelement mit der Ausnehmung auf einem zentral im Gasventil angeordneten Führungsbolzen geschoben und am Führungsbolzen axial verschiebbar, geführt gelagert ist, wobei der Magnetanker am Führungsbereich mit dem Ventilelement verbunden ist und wobei im Gasventil ein Anschlag für das Ventilelement vorgesehen ist, der mit dem Führungsbereich zusammenwirkt.

Gasventile zur Zuführung von gasförmigem Kraftstoff in den Brennraum einer Verbrennungskraftmaschine benötigen große Öffnungsquerschnitte, um in den kurzen zur Verfügung stehenden Öffnungszeiten genug gasförmigen Kraftstoff in den Zylinderraum einbringen zu können. Solche Gasventile werden oftmals durch Elektromagnete geöffnet, wobei der Elektromagnet einen ausreichenden Hub ermöglichen muss und ausreichende Magnetkraft aufbringen muss, um die notwendigen Gasmengen in den kurzen Öffnungszeiten zuführen zu können. Außerdem sind möglichst kurze Öffnungs- und Schließzeiten erwünscht, damit die Zeit in der das Gasventil im Kurbelzyklus voll offen sein kann möglichst lange wird. Während eines Kurbelzyklus der Verbrennungskraftmaschine, der in Winkelweg der Kurbelwelle ausgedrückt für einen 4-Takt Motor 720° und für einen 2-Takt Motor 360° dauert, wird einmal gasförmiger Brennstoff in den Brennraum der Verbrennungskraftmaschine zugeführt. Dazu stehen in der Regel nur sehr kurze Zeiten zur Verfügung, weshalb das Gasventil sehr rasch öffnen und schließen muss und ausreichend Strömungsquerschnitt aufweisen muss, um die benötigte Gasmenge in der zur Verfügung stehenden Zeit einbringen zu können. Zum Einbringen des gasförmigen Brennstoffes stehen typischerweise bei Großmotoren 90° Kurbelwinkel des gesamten Kurbelzyklus zur Verfügung. Innerhalb dieser Injektionszeit muss das Gasventil geöffnet werden, der gasförmige Brennstoff dem Brennraum zugeführt werden und das Gasventil wieder geschlossen werden. Abhängig von der Drehzahl stehen dafür somit nur wenige Millisekunden, typischerweise 10-25ms, zur Verfügung. Das Gasventil muss folglich in der Lage sein, sehr rasch zu schalten und muss einen großen Öffnungsquerschnitt aufweisen, um innerhalb dieser kurzen Zeiten genügend gasförmigen Brennstoff zuführen zu können. Speziell bei großen Gasventilen für Großmotoren sind diese Anforderungen aber nur schwer zu erreichen.

Gasventile haben daher häufig, ähnlich wie Kompressorventile, scheibenförmige Ventilelement mit einer Vielzahl von Strömungskanälen, wobei das Ventilelement dichtend mit einem Ventilsitz, der ebenfalls eine Vielzahl von Strömungskanälen aufweist, zusammenwirkt. Ein solches Ventilelement besteht typischerweise aus einer Anzahl von konzentrischen Ringen, die durch radiale, über den Umfang verteilte Stege miteinander verbunden sind. Ein Unterschied zwischen einem Gasventil und einem Kompressorventil liegt darin, dass ein Kompressorventil selbsttätig ist, wohingegen ein Gasventil, z.B. mittels eines Elektromagneten, gesteuert ist, also aktiv geschaltet wird. Während das Ventilelement eines Kompressorventils am Ventilfänger gestoppt wird und dort aufgrund des wirkenden Druckes vollflächig anliegt, muss das Ventilelement eines Gasventils an einem Anschlag gestoppt werden. Bei einem Kompressorventil wird der Mittelbolzen mit so geringem Durchmesser wie möglich ausgeführt, um die verfügbare Strömungsfläche so groß wie möglich halten zu können. Da auf das Ventilelement eines Gasventils auch die Öffnungskraft, z.B. eine Magnetkraft wirkt, können im Ventilelement bei Anliegen am Anschlag Biegespannungen entstehen, die dazu führen können, dass sich das Ventilelement signifikant verbiegt und z.B. am Elektromagneten anschlägt oder die Durchströmung des Gases durch das Ventil beeinträchtigt wird. Dies ist insbesondere immer dann der Fall, wenn die Öffnungskraft zentral am Ventilelement angreift, wie z.B. bei einer Ausführung mit einem zentralen Bolzen, an dem das Ventilelement befestigt ist, und der Anschlag radial außen angeordnet ist. Die Bauteile, die einer Durchbiegung ausgesetzt sind, müssen daher entsprechend stärker dimensioniert werden, was aber wiederum mehr Masse und langsamere Öffnungs- und Schließzeiten bedeutet. Eine andere Möglichkeit besteht darin, den Restluftspalt so groß zu wählen, dass das Ventilelement trotz Durchbiegung nicht am Elektromagneten anschlägt. Ein großer Luftspalt verringert aber die wirksame Magnetkraft, was entweder die schaltbaren Differenzdrücke und die erreichbaren Öffnungsgeschwindigkeiten reduziert oder größere Elektromagneten bedingt, was aber beides unerwünscht ist.

Ein Beispiel für ein solches Gasventil ist z.B. in der US 5 398 724 A offenbart. Das Ventilelement dieses Gasventils ist mittels eines zentralen Bolzens am Magnetanker befestigt. Am Ventilelement sind über den Umfang verteilt Ausnehmungen zur Aufnahme von Spiralfedern vorgesehen. Die anderen Enden der Spiralfedern sind in Ausnehmungen an einem Federsitz angeordnet, der auch den Anschlag für das Ventilelement bildet. Durch die Federn wird einerseits die Schließkraft erzeugt und andererseits das Ventilelement geführt. Da der Anschlag für das Ventilelement radial außen vorgesehen ist, entsteht im Ventilelement eine unerwünschte Biegespannung.

In einem Kompressor ist normalerweise immer Öl im komprimierten Medium (z.B. Luft), aus der Schmierung des Kompressors, weshalb die beweglichen Teile eines Kompressorventils ebenfalls mitgeschmiert werden. Bei einem solchen "geschmierten" Kompressorventil kann das Ventilelement am zentralen Mittelbolzen geführt sein. Bei trockenlaufenden Kompressorventilen hingegen, also bei Ventilen ohne einer solchen inhärenten Schmierung, kann das Ventilelement aber aufgrund der Reibung und des damit verbundenen Verschleißes und Temperaturanstiegs nicht zentral am Mittelbolzen geführt werden. Daher sind nur lenkergeführte trockenlaufende Kompressorventile bekannt, bei denen ein Teil des Ventilelements ortsfest gehalten wird und dieser ortsfeste Teil über sogenannte Lenkerarme mit dem beweglichen Teil des Ventilelements verbunden ist, der so reibungsarm geführt wird.

Auch bei Gasventilen sind bisher keine trockenlaufenden Gasventile bekannt, bei denen das Ventilelement in einer Führung geführt ist. Ein geführtes Ventilelement ist z.B. aus der EP 425 327 B1 für ein geschmiertes Gasventil bekannt, bei dem dem Ventil unter Druck stehendes Schmiermittel zugeführt wird. Dieses Gasventil weist jedoch kein scheibenförmiges Ventilelement mit einer Anzahl von Durchströmkanälen auf, sondern das Ventilelement besteht hier aus einem kreisförmigen Magnetanker, der mit einem senkrechten Kolben verbunden ist. Die dem Magnetanker abgewandte Stirnfläche des Kolbens bildet dabei die Dichtfläche, die mit einer Stirnfläche eines Ventilsitzes dichtend zusammenwirkt. Der Kolben wird dabei radial außen in einem zylindrischen Durchlass des Gasventils geführt. Aufgrund dieser Anordnung tritt hier das Problem der Durchbiegung des Ventilelements gar nicht auf.

Die oben genannte US 5 398 724 A zeigt ebenfalls ein trockenlaufendes Gasventil, bei dem Führung des Ventilelements über die Spiralfedern erfolgt und nicht über Führungsflächen.

US 4,941,447 und US 4,787,418 offenbaren jeweils Dosierventile, welche die Merkmale des Oberbegriffs von Anspruch 1 im Wesentlichen verwirklichen, wobei jedoch diese Dosierventile für einen Flüssigbrennstoff vorgesehen sind.

Es ist nun eine Aufgabe der gegenständlichen Erfindung ein trockenlaufendes Gasventil anzugeben, bei dem die Probleme mit der Durchbiegung des Ventilelements weitgehend vermieden werden und trotzdem hohe Öffnungsgeschwindigkeiten erzielbar sind.

Dieses Aufgabe wird durch das erfindungsgemäße Gasventil dadurch gelöst, dass das Ventilelement eine Anzahl von Durchströmkanälen aufweist, dass im Gasventil ein Mittelteil vorgesehen ist, in dem in einer zentralen Ausnehmung der Elektromagnet und ein erstes Ende einer Feder angeordnet sind, die mit dem Ventilelement zusammenwirken, und dass ein Anschlagring vorgesehen ist, in dem das zweite Ende der Feder angeordnet ist und der Anschlagring axial direkt oder über eine Distanzscheibe am Ventilelement anliegt. Aufgrund des Angriffspunktes des Magnetankers und des Anschlages am radial innen liegenden Führungsbereich des Ventilelements, wird die mögliche Durchbiegung des Ventilelements und des Magnetankers erheblich reduziert, womit die Bauteile weniger massiv ausgeführt werden können, was wiederum weniger bewegte Masse und höhere Öffnungsgeschwindigkeiten bedeutet. Gleichzeitig kann mit dieser Ausführung der Restluftspalt sehr klein gehalten werden, womit hohe Magnetkräfte und damit höhere Differenzdrücke, vor allem ohne Druckausgleich, geschaltet werden können und noch bessere Öffnungsgeschwindigkeiten erzielt werden können.

Wenn im Gasventil ein Mittelteil vorgesehen ist, in dem ein Einstellteil axial verschiebbar geführt gelagert angeordnet ist, wobei der Einstellteil an einem axialen Ende über ein Gewinde mit einer Einstellmutter verbunden ist und in einer zentralen Ausnehmung im Einstellteil der Elektromagnet und ein erstes Ende einer Feder angeordnet sind, die mit dem Ventilelement zusammenwirken, kann auf sehr einfache Weise der Hub des Gasventils verstellt werden, in dem der Einstellteil über die Einstellmutter axial verschoben wird.

Um eine genauere Einstellung des Ventilhubes zu ermöglichen, kann axial zwischen Mittelteil und Einstellteil eine Tellerfeder angeordnet sein, die den Einstellteil vorspannt, um ein eventuell vorhandenes axiales Spiel auszugleichen.

Ein Anschlagring, axial direkt oder über eine Distanzscheibe am Ventilelement anliegt, verhindert, dass das Ventilelement beim Öffnen durch das Anschlagen beschädigt wird. Wenn zusätzlich noch eine Distanzscheibe zwischen Ventilelement und Anschlagring vorgesehen ist, kann sehr einfach und genau der Restluftspalt eingestellt werden.

Um den Reibungswiderstand zwischen Führungsbolzen und Ventilelement zu verringern, kann am Führungsabschnitt des Führungsbolzens eine Umfangsnut vorgesehen sein, in der ein Gleitring eingesetzt ist. Damit lassen sich die Öffnungsgeschwindigkeiten weiter steigern. Vorteilhaft ist zwischen Gleitring und Grund der Umfangsnut ein O-Ring angeordnet, um den Gleitring zu spannen und eine genauere Führung zu erzielen.

Wenn im Magnetanker eine Ausnehmung vorgesehen ist, die das Volumen zwischen Magnetanker und Elektromagneten mit einem Entlüftungsvolumen verbindet, kann die erreichbare Öffnungsgeschwindigkeit noch weiter gesteigert werden.

Um die Sicherheit gegen Leckage des Gasventils zu erhöhen, kann das Gasventil doppelwandig ausgeführt sein.

Trockenlaufende Gasventile haben allerdings noch ein anderes Problem, speziell bei absolut trockenen Gasen, wie es z.B. vorkommt, wenn das Gas aus der flüssigen Phase abgedampft wird (z.B. bei Tankschiffen). Da absolut trocken Gase keine Schmierwirkung haben, kommt es durch die Schlagbeanspruchung beim Schalten häufig zu einem Kaltverschweißen zwischen Ventilelement und Ventilsitz, was das Gasventil oder Teile davon beschädigen kann. Um dieses Problem zu beseitigen, kann vorgesehen sein, das Ventilelement und den Ventilsitz aus unterschiedlichen Materialien, bevorzugt aus unterschiedlichen Metallen, zu fertigen. Eine besonders günstige Materialkombination ergibt sich bei einem Ventilsitz aus Stahl und einem Ventilelement aus Aluminium, eventuell Aluminium mit einer Eloxalbeschichtung. Das Ventilelement kann aber auch aus einem geeigneten Kunststoff oder faserverstärktem Kunststoff gefertigt werden.

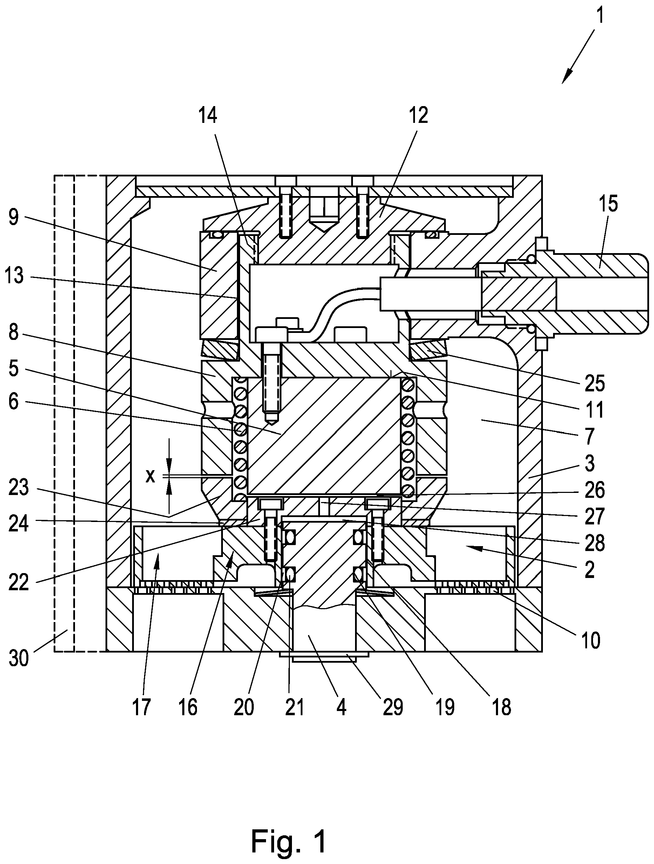

Die Erfindung wird nachfolgend unter Bezugnahme auf die beispielhaften, eine vorteilhafte Ausgestaltung zeigenden und nicht einschränkenden Figuren 1 erläutert, die einen Schnitt durch ein erfindungsgemäßes Gasventil zeigt.

Das erfindungsgemäße Gasventil 1 wie in Fig. 1 dargestellt besteht aus einem Gehäuse 3, in dem ein Mittelteil 9 vorgesehen ist. An einem axialen Ende des Gasventils 1 ist ein Ventilsitz 10 vorgesehen, das damit gleichzeitig die Gasaustrittsöffnung des Gasventils 1 bildet. Der Ventilsitz kann Teil des Gehäuses 3 sein. Am gegenüberliegenden axialen Ende des Gasventils 1 ist hier die Gaseintrittsöffnung vorgesehen. Das hier dargestellt Gasventil 1 wird somit axial durchströmt. Es ist aber selbstverständlich ebenfalls möglich, dass das Gas an einer geeigneten Stelle im Gehäuse 3 auch radial zugeführt werden könnte.

Im Mittelteil 9 ist ein Einstellteil 8 angeordnet. Der Einstellteil 8 ist dabei in einer Ausnehmung 13 des Mittelteils 9 geführt gelagert angeordnet und am dem Ventilsitz 10 abgewandten axialen Ende durch ein Gewinde 14 einer Einstellmutter 12 gehalten. Die Einstellmutter 12 liegt dabei axial am axialen Ende des Mittelteils 9 auf. Der Einstellteil 8 ist dadurch durch Drehen der Einstellmutter 12 axial verschiebbar, um den Ventilhub einfach einstellen zu können, wie weiter unten nach eingehender ausgeführt wird. Axial zwischen Mittelteil 9 und Einstellteil 8 kann auch eine Tellerfeder 25 angeordnet sein, die den Einstellteil 8 vorspannt, um ein eventuell vorhandenes axiales Spiel auszugleichen und eine genauere Einstellung des Ventilhubes ermöglicht.

Im dem Ventilsitz 10 zugewandten axialen Ende des Einstellteils 8 ist in einer zentralen Ausnehmung 11 der Elektromagnet 5 und eine Feder 6, hier eine Spiralfeder, angeordnet, die wie nachfolgend beschrieben mit dem Ventilelement 2 zusammenwirken. Die Spiralfeder 6 ist dabei radial außerhalb des Elektromagneten 5 angeordnet ist, wodurch die Spiralfeder 6 nicht durch den verfügbaren Bauraum im Elektromagneten begrenzt ist und daher größer und stärker dimensioniert werden kann, was höhere Federkräfte ermöglicht. Die Zuführung des elektrischen Stroms für den Elektromagneten 5 kann, wie in Fig. 1 dargestellt, über einen Anschlussstecker 15 im Gehäuse 3 und über eine Ausnehmung im Mittelteil 9 erfolgen.

Zwischen Ventilsitz 10 und Einstellteil 8, mit Elektromagnet 5 und Spiralfeder 6, ist ein Ventilelement 2 angeordnet. Das Ventilelement 2 ist scheibenförmig ausgeführt mit einem radial innen liegenden Führungsbereich 16 und einem radial außen liegenden, eine Anzahl von Durchströmkanäle aufweisenden Durchströmbereich 17. Der Durchströmbereich 17 kann z.B. mit einer Anzahl von konzentrischen Ringen, die durch radiale, über den Umfang verteilten Stegen miteinander verbunden sind, ausgeführt sein. Der Durchströmbereich 17 sollte eine möglichst große Strömungsfläche bieten, um das Durchströmen einer möglichst großen Gasmenge durch die Durchströmkanäle zu ermöglichen. Dazu ist es vorteilhaft, dass der Durchströmbereich 17 am Ventilelement 2 radial außen angeordnet ist.

Im Führungsbereich 16 ist eine zentrale Ausnehmung 18 vorgesehen, dessen innere Umfangsfläche die Führungsfläche für das Ventilelement 2 bildet. Zur Führung des Ventilelements 2 ist im Ventilsitz 10 ein zentraler Führungsbolzen 4 angeordnet, der sich axial aus dem Ventilsitz 10 erstreckt und auf dessen freien axialen Ende das Ventilelement 2 mit seiner zentralen Ausnehmung 18 geschoben ist. Das Ventilelement 2 ist damit auf dem Führungsbolzen 4 axial verschiebbar, geführt gelagert. Der Führungsbolzen 4 könnte aber auch ein integraler Teil des Ventilsitzes 10 sein. Im Führungsabschnitt des Führungsbolzens 4 können, wie in Fig. 1 dargestellt, in Umfangsnuten 19 auch Gleitringe 20 aus tribologisch günstigem Material, wie z.B. PTFE, eingesetzt sein, um die Reibung zwischen Ventilelement 2 und Führungsbolzen 4 noch weiter zu verringern. Zwischen Gleitring 20 und Grund der Umfangsnut 19 kann auch ein O-Ring 21 eingesetzt sein, um den Gleitring 20 zu spannen.

Am dem dem Ventilsitz 10 abgewandten Ende des Ventilelements 2 ist ein Magnetanker 22 angeordnet, der zum Öffnen und Schließen des Gasventils 1 mit dem Elektromagneten 5 zusammenwirkt. Der Magnetanker 22 ist radial außerhalb des Führungsbolzens 4 mit dem Ventilelement 2 verbunden, hier z.B. durch über den Umfang verteilte Schrauben. Der Magnetanker 22 könnte aber auch Teil des Ventilelements 2 sein. Aufgrund der unterschiedlichen Materialanforderungen von Magnetanker 22 und Ventilelement 2 sind diese aber in der Regel zweiteilig ausgeführt.

Die Spiralfeder 6, die mit einem Ende in der Ausnehmung 11 im Einstellteil 8 angeordnet ist, ist im in Fig. 1 gezeigten Ausführungsbeispiel mit dem gegenüberliegenden Ende in einem Anschlagring 23 angeordnet. Der Anschlagring 23 liegt axial am Führungsbereich 16 des Ventilelements 2 an und ist teilweise um den Magnetanker 22 und Elektromagneten 5 angeordnet. Zwischen Anschlagring 23 und Ventilelement 2 kann auch eine Distanzscheibe 24 angeordnet sein, um den Restluftspalt (der bei bestromten Elektromagneten 5 übrig bleibende Luftspalt) auf einen gewünschten Wert einstellen zu können. Die Spiralfeder 6 drückt dabei den Anschlagring 23 (und damit auch das Ventilelement 2 mit Magnetanker 22) gegen den feststehenden Einstellteil 8 in Richtung Ventilsitz 10 und wirkt somit als Schließfeder für das Gasventil 1. Die Spiralfeder 6 drückt damit aber auch den Anschlagring 23 und den Einstellteil 8 axial auseinander, sodass dazwischen ein axialer Abstand x entsteht, der den Ventilhub vorgibt. Durch Verdrehen der Einstellmutter 12 im Einstellteil 8 wird dieser axiale Abstand x (und damit der Ventilhub) vergrößert oder verkleinert. Auf diese Weise lässt sich der Ventilhub sehr einfach und sehr genau einstellen bzw. nachjustieren, ohne das Gasventil auseinandernehmen zu müssen.

Es ist aber auch denkbar, dass ein Ende der Spiralfeder 6 direkt im Ventilelement 2 angeordnet ist, womit der Anschlagring 23 und gegebenenfalls die Distanzscheibe 24 auch entfallen können. In diesem Fall würde das Ventilelement 2 im geöffneten Zustand direkt am Einstellteil 8 anliegen. Aufgrund der hohen Öffnungsgeschwindigkeiten entstehen beim Öffnen aber doch hohe Anschlagkräfte, die das Ventilelement 2beschädigen könnten, weshalb ein Anschlagring 23 bevorzugt ist.

Das Ventilelement 2 ist in der Regel aus festem Material gefertigt, z.B. aus Metall, wie z.B. Stahl, oder aus einem geeigneten Kunststoff oder faserverstärktem Kunststoff.

Um ein Kaltverschweißen zwischen Ventilsitz 10 und Ventilelement 2 zu verhindern, kann auch eine geeignete Materialkombination gewählt werden. Bevorzugt werden dazu unterschiedliche Metalle für das Ventilelement 2 und den Ventilsitz 10 eingesetzt, wie z.B. ein Ventilsitz 10 aus Stahl und ein Ventilelement 2 aus Aluminium, eventuell mit einer speziellen Oberflächenbehandlung, wie z.B. einer Eloxalbeschichtung. Das Ventilelement 2 kann aber auch in Kombination mit einem Ventilsitz 10 aus Metall aus einem geeigneten Kunststoff oder faserverstärktem Kunststoff gefertigt werden.

Es ist aber ebenso denkbar, auf den beweglichen Einstellteil 8 und die Einstellmutter 12 zu verzichten. In diesem Fall kann der Elektromagnet 5 im entsprechend geformten Mittelteil 9 (der z.B. wie Mittelteil 8 und Einstellteil 8 zusammen ausgeformt sein kann) angeordnet werden. Die Einstellung des Ventilhubes kann dann z.B. mittels unterschiedlicher Distanzscheiben zwischen Mittelteil 9 und Ventilelement 2 oder Anschlagring 23 erfolgen.

Die oben beschriebene Ausgestaltung eines Gasventils 1 ermöglicht auch eine sehr einfache Montage und Wartung des Ventils, da der Ventilsitz 1 sehr einfach entfernt werden kann und die anderen Teile des Gasventils 1 dann von der Seite des Ventilsitzes 1 zugänglich wird. Dazu muss z.B. nur ein Sprengring 29, der den Führungsbolzen 4 im Ventilsitz 10 fixiert, entfernt werden, womit der Ventilsitz 10 entfernt werden kann. Der Ventilsitz 10 kann aber natürlich auch gemeinsam mit dem Führungsbolzen 4 entfernt werden.

Durch die bevorzugte Anordnung des Gaseintritts und des Gasaustritts an den axialen Enden des Gasventils 1 kann auch sehr einfach eine kompakte doppelwandige Ausführung des Gasventils 1 realisiert werden, um für sensible Anwendungen (wie z.B. in Schiffsanwendungen) eine erhöhte Sicherheit gegen Leckage gewährleisten zu können. Dazu muss um die Wand des Gehäuses 3 einfach eine zweite Wand 30 gebaut werden, die das Gasventil 1 vollkommen umgibt (wie in Fig. 1 auf einer Seite strichliert angedeutet). Sollte das innen liegende Gasventil 1 nun undicht werden, stellt die äußere Wand 30 sicher, dass kein Gas aus dem Gasventil 1 austreten kann.

Im nicht bestromten Zustand des Elektromagneten 5 wird das Ventilelement 2 durch die Spiralfeder 2 über den Anschlagring 23 gegen den Ventilsitz 10 gedrückt und dichtet somit das Gasventil 1 ab. Wird der Elektromagnet 5 bestromt, wird der Magnetanker 22 angezogen, womit das Ventilelement 2 vom Ventilsitz 10 abhebt und das Gas durch das Gasventil 1 durchströmen kann. Der Anschlagring 23 wird dabei im vollständig geöffneten Zustand am Einstellteil 8 anliegen, der damit den Anschlag für das Ventilelement 2 bildet.

Zwischen Elektromagneten 5 und Magnetanker 22 bildet sich ein gasgefülltes erstes Volumen 26, das beim Öffnen des Ventils wie eine Dämpfung wirkt. Um das Gasventil 1 schneller öffnen zu können, kann im Magnetanker 22 eine mit einem größeren Entlüftungsvolumen 28, z.B. zwischen den axial beabstandeten axialen Enden des Führungsbolzens 4 und des Magnetankers 22, verbundene Ausnehmung 27, z.B. eine axial durch den Magnetanker 22 durchgehende Bohrung, vorgesehen sein. Beim Öffnen des Gasventils wird somit das erste Volumen 26 über die Ausnehmung 27 entlüftet.

## Patentansprüche

1. Trockenlaufendes Gasventil mit einem scheibenförmigen Ventilelement (2), das mit einem Ventilsitz (10) dichtend zusammenwirkt, wobei das Ventilelement (2) mit einem Magnetanker (22) verbunden ist, der mit einem im Gasventil (1) angeordneten Elektromagneten (5) zusammenwirkt, wobei das Ventilelement (2) radial innen geführt gelagert angeordnet ist, indem am Ventilelement (2) radial innen ein Führungsbereich (16) mit einer zentralen Ausnehmung (18) vorgesehen ist, deren innere Umfangsfläche eine Führungsfläche bildet und das Ventilelement (2) mit der zentralen Ausnehmung (18) auf einem zentral im Gasventil (1) angeordneten Führungsbolzen (4) geschoben und am Führungsbolzen (4) axial verschiebbar, geführt gelagert ist, wobei der Magnetanker (22) am Führungsbereich (16) mit dem Ventilelement (2) verbunden ist und wobei im Gasventil (1) ein Anschlag für das Ventilelement (2) vorgesehen ist, der mit dem Führungsbereich (16) zusammenwirkt, **dadurch gekennzeichnet, dass** das Ventilelement (2) eine Anzahl von Durchströmkanälen aufweist, **dass** im Gasventil (1) ein Mittelteil (9) vorgesehen ist, in dem in einer zentralen Ausnehmung (11) der Elektromagnet (5) und ein erstes Ende einer Feder (6) angeordnet sind, die mit dem Ventilelement (2) zusammenwirken, **und dass** ein Anschlagring (23) vorgesehen ist, in dem das zweite Ende der Feder (6) angeordnet ist und der Anschlagring (23) axial direkt oder über eine Distanzscheibe (24) am Ventilelement (2) anliegt.

2. Trockenlaufendes Gasventil nach Anspruch 1, **dadurch gekennzeichnet, dass** im Gasventil (1) ein Mittelteil (9) vorgesehen ist, in dem ein Einstellteil (8) axial verschiebbar geführt gelagert angeordnet ist, wobei der Einstellteil (8) an einem axialen Ende über ein Gewinde (14) mit einer Einstellmutter (12) verbunden ist und in einer zentralen Ausnehmung (11) im Einstellteil (8) der Elektromagnet (5) und ein erstes Ende einer Feder (6) angeordnet sind, die mit dem Ventilelement (2) zusammenwirken.

3. Trockenlaufendes Gasventil nach Anspruch 2, **dadurch gekennzeichnet, dass** axial zwischen Mittelteil (9) und Einstellteil (8) eine Tellerfeder (25) angeordnet ist.

4. Trockenlaufendes Gasventil nach einem der Ansprüche 1 bis 3, **dadurch gekennzeichnet, dass** das zweite Ende der Feder (6) im Ventilelement (2) angeordnet ist.

5. Trockenlaufendes Gasventil nach einem der Ansprüche 1 bis 4, **dadurch gekennzeichnet, dass** am Führungsabschnitt des Führungsbolzens (4) eine Umfangsnut (19) vorgesehen ist, in der ein Gleitring (20) eingesetzt ist.

6. Trockenlaufendes Gasventil nach Anspruch 5, **dadurch gekennzeichnet, dass** zwischen Gleitring (20) und Grund der Umfangsnut (19) ein O-Ring (21) angeordnet ist.

7. Trockenlaufendes Gasventil nach einem der Ansprüche 1 bis 6, **dadurch gekennzeichnet, dass** im Magnetanker (22) eine Ausnehmung (27) vorgesehen ist, die das Volumen (26) zwischen Magnetanker (22) und Elektromagneten (5) mit einem Entlüftungsvolumen (28) verbindet.

8. Trockenlaufendes Gasventil nach einem der Ansprüche 1 bis 7, **dadurch gekennzeichnet, dass** das Gasventil (1) doppelwandig ausgeführt ist.

9. Trockenlaufendes Gasventil nach einem der Ansprüche 1 bis 8, **dadurch gekennzeichnet, dass** das Ventilelement (2) und der Ventilsitz (10) aus unterschiedlichen Materialien, bevorzugt unterschiedlichen Metallen oder Metall und Kunststoff, gefertigt sind.

10. Trockenlaufendes Gasventil nach Anspruch 9, **dadurch gekennzeichnet, dass** der Ventilsitz (10) aus Stahl und das Ventilelement (2) aus Aluminium oder Kunststoff oder faserverstärktem Kunststoff gefertigt ist.

## Claims

1. A dry running gas valve having a disk-shaped valve element (2) which valve element interacts sealingly with a valve seat (10), wherein the valve element (2) is connected to a magnet armature (22) which interacts with an electromagnet (5) arranged in the gas valve (1), wherein the valve element (2) is arranged such that it is mounted radially on the inside in guided manner by providing radially on the inside of the valve element (2) a guide region (16) with a central recess (18), the inner circumferential surface of which forms a guide surface and the valve element (2) is slid with the central recess (18) onto a guide pin (4) centrally arranged in the gas valve (1) and is mounted on the guide pin (4) in an axially displaceable and guided manner, wherein the magnet armature (22) is connected at the guide region (16) to the valve element (2) and wherein in the gas valve (1), a limit stop for the valve element (2) is provided which limit stop interacts with the guide region (16), **characterized in that** the valve element (2) comprises a number of throughflow channels, **that** in the gas valve (1), a center part (9) is provided in which in a central recess (11), the electromagnet (5) and a first end of a spring (6), which interact with the valve element (2), are arranged, **and that** an abutment ring (23) is provided in which the second end of the spring (6) is arranged, and the abutment ring (23), directly or via a spacer (24), rests axially on the valve element (2).

2. The dry running gas valve according to claim 1, **characterized in that** in the gas valve (1), a center part (9) is provided in which an adjustment part (8) is arranged such that it is mounted in an axially displaceable and guided manner, wherein the adjustment part (8) is connected at one axial end via a thread (14) to an adjustment nut (12), and in a central recess (11) in the adjustment part (8), the electromagnet (5) and a first end of a spring (6), which interact with the valve element (2), are arranged.

3. The dry running gas valve according to claim 2, **characterized in that** axially between center part (9) and adjustment part (8), a disk spring (25) is arranged.

4. The dry running gas valve according to any one of the claims 1 to 3, **characterized in that** the second end of the spring (6) is arranged in the valve element (2).

5. The dry running gas valve according to any one of the claims 1 to 4, **characterized in that** on the guide section of the guide pin (4), a circumferential groove (19) is provided into which a slide ring (20) is inserted.

6. The dry running gas valve according to claim 5, **characterized in that** between slide ring (20) and the base of the circumferential groove (19), an O-ring (21) is arranged.

7. The dry running gas valve according to any one of the claims 1 to 6, **characterized in that** in the magnet armature (22), a recess (27) is provided which connects the volume (26) between magnet armature (22) and electromagnet (5) to a venting volume (28).

8. The dry running gas valve according to any one of the claims 1 to 7, **characterized in that** the gas valve (1) is double-walled.

9. The dry running gas valve according to any one of the claims 1 to 8, **characterized in that** the valve element (2) and the valve seat (10) are made of different materials, preferred different metals or metal and plastic.

10. The dry running gas valve according to claim 9, **characterized in that** the valve seat (10) is made of steel and the valve element (2) is made of aluminum or plastic or fiber-reinforced plastic.

## Revendications

1. Vanne à gaz à fonctionnement à sec comprenant un élément de vanne (2) en forme de disque, qui coopère de manière étanche avec un siège de vanne (10), l'élément de vanne (2) étant relié à un induit magnétique (22) qui coopère avec un électroaimant (5) disposé dans la vanne à gaz (1), l'élément de vanne (2) étant logé de manière à être guidé radialement à l'intérieur du fait qu'il est prévu radialement à l'intérieur, au niveau de l'élément de vanne (2), une zone de guidage (16) pourvue d'un évidement central (18) dont la surface périphérique intérieure forme une surface de guidage et l'élément de vanne (2) pourvu de l'évidement central (18) est logé de façon à glisser sur une tige de guidage disposée centralement dans la vanne à gaz et de façon à pouvoir coulisser axialement sur la tige de guidage (4), l'induit magnétique (4) étant relié à l'élément de vanne (2) au niveau de la zone de guidage (16) et une butée destinée à l'élément de vanne (2) étant prévue dans la vanne à gaz (1), laquelle butée coopère avec la zone de guidage (16), **caractérisée en ce que** l'élément de vanne (2) comporte un certain nombre de conduits d'écoulement, **en ce que** la vanne de gaz contient un élément central (9) dans lequel sont disposés, dans un évidement central (11), l'électroaimant (5) et une première extrémité d'un ressort (6), lesquels coopèrent avec l'élément de vanne (2), et **en ce qu'**il est prévu une bague de butée (23) dans laquelle est disposée la seconde extrémité du ressort (6) et la bague de butée (23) vient en appui axial sur l'élément de vanne (2) directement ou par le biais d'un disque d'écartement (24).

2. Vanne à gaz à fonctionnement à sec selon la revendication 1, **caractérisée en ce que** la vanne à gaz (1) contient un élément central (9) dans lequel un élément de réglage (8) est logé de manière à pouvoir coulisser axialement, l'élément de réglage (8) étant relié, à une extrémité axiale, à un écrou de réglage (12) par le biais d'un filetage (14) et l'électroaimant (5) et une première extrémité d'un ressort (6), qui coopèrent avec l'élément de vanne (2), sont disposés dans un évidement central (11) ménagé dans l'élément de réglage (8).

3. Vanne à gaz à fonctionnement à sec selon la revendication 2, **caractérisée en ce qu'**une rondelle-ressort (25) est disposée axialement entre l'élément central (9) et l'élément de réglage (8).

4. Vanne à gaz à fonctionnement à sec selon une des revendications 1 à 3, **caractérisée en ce que** la seconde extrémité du ressort (6) est disposée dans l'élément de vanne (2).

5. Vanne à gaz à fonctionnement à sec selon une des revendications 1 à 4, **caractérisée en ce qu'**une rainure circonférentielle (19), dans laquelle une bague de glissement (20) est insérée, est formée au niveau de la partie de guidage de la tige de guidage (4).

6. Vanne à gaz à fonctionnement à sec selon la revendication 5, **caractérisée en ce qu'**un joint torique (21) est disposé entre la bague coulissante (20) et la base de la rainure circonférentielle (19).

7. Vanne à gaz à fonctionnement à sec selon une des revendications 1 à 6, **caractérisée en ce que** l'induit magnétique (22) comporte un évidement (27) qui relie le volume (26) situé entre l'induit magnétique (22) et l'électroaimant (5) à un volume de purge (28).

8. Vanne à gaz à fonctionnement à sec selon une des revendications 1 à 7, **caractérisée en ce que** la vanne à gaz (1) a une conception à double paroi.

9. Vanne à gaz à fonctionnement à sec selon une des revendications 1 à 8, **caractérisée en ce que** l'élément de vanne (2) et le siège de vanne (10) sont fabriqués à partir de matériaux différents, de préférence de métaux différents ou d'un métal et d'une matière synthétique.

10. Vanne à gaz à fonctionnement à sec selon la revendication 9, dans laquelle le siège de vanne (10) est en acier et l'élément de vanne (2) est en aluminium ou en matière synthétique ou en matière synthétique renforcée par des fibres.
